# EUROPEAN PATENT SPECIFICATION

(11) **EP 2 865 535 B1**
(45) Date of publication and mention of the grant of the patent: **27.11.2019**
(21) Application number: 14189521.9
(22) Date of filing: 20.10.2014
(51) Int. Cl.: B60B 9/00, B60B 9/10, B60B 9/14, B60B 27/02

(54) **Motorcycle with lateral shock-absorbing device**
Motorrad mit seitlicher Stoßdämpfungsvorrichtung
Motocyclette avec dispositif d'absorption de chocs latéraux

(30) Priority: 24.10.2013 IT MI20131775
(43) Date of publication of application: 29.04.2015
(73) Proprietor: Ducati Motor Holding S.p.A., 40132 Bologna (IT)
(72) Inventor: Domenicali, Claudio, 40132 Bologna (IT)
(74) Representative: Ripamonti, Enrico

(56) References cited:
- FR-A- 369 167
- FR-A- 1 065 107
- GB-A- 581 845
- US-A- 2 282 589

## Description

This invention relates to a motorcycle according to the introductory part of the main claim.

As is known, a motorcycle comprises a frame mounted on wheels connected to said frame by means of front and rear forks, with two arms or a single arm. Shock-absorbing devices, capable of enabling the absorption of stresses that are generated along the median plane of the motorcycle, are associated with said forks.

During use, however, when the motorcycle negotiates a bend, it leans over to one side, at a very marked angle when the motorcycle is used in a competition. In this condition, the forks and shock-absorber devices associated with them are incapable of efficiently absorbing the stresses directed in lateral directions in relation to them, or rather, in relation to the median plane of the vehicle. These stresses, generated by the imperfections of the road surface, can contribute to the emergence of vibrations or "chattering" on the vehicle (particularly on its front part), which make it difficult to steer, especially at high speed.

In order to enable the absorption of the above-mentioned lateral stresses, various solutions are known that envisage shock-absorbing devices associated with at least the front wheel of the vehicle. These devices are very diverse but in general comprise an elastic or elastically deformable body connected to the hub of the wheel or to a part of the vehicle's steering assembly.

Known solutions do not enable a rapid adjustment of the shock-absorbing response of the above-mentioned device and are costly to produce and/or fit.

GB581845 describes a cycle or similar vehicle having a frame with a median plane, front and rear wheels, each of which comprises a hub having a longitudinal spindle on which is mounted a rim carrying a tyre. This hub is supported by a fork. Positioned between the hub and the rim is an elastically deformable cylindrical tubular device whose opposing ends form flanges interposed between said rim and protruding collars of the hub.

This known solution does not, however, enable adjustment of the shock-absorbing response of the shock-absorbing device defined by the cylindrical tubular device because, among other things, it is compressed between the rim and the single end collars as these form part of portions of the hub screwed tightly together.

The aim of the present invention is to offer a motorcycle provided with a shock-absorbing device capable of absorbing transverse stresses, or in any event stresses not arranged along the plane of the vehicle, that is an improvement on known solutions.

In particular, the aim of the invention is to offer a motorcycle in which said shock-absorbing device is simple to make and fit onto the vehicle in order to reduce the time taken for its possible replacement, which could be advantageous when this operation is performed on a competition motorcycle.

Another aim is to offer a motorcycle of the type described that allows the response of the shock-absorbing device to be easily and quickly calibrated.

These and other aims, which will become clear to a person skilled in the art, will be achieved by a motorcycle according to the accompanying claims.

A better understanding of this invention will emerge from the following drawings, given purely by way of a nonlimiting example, in which:

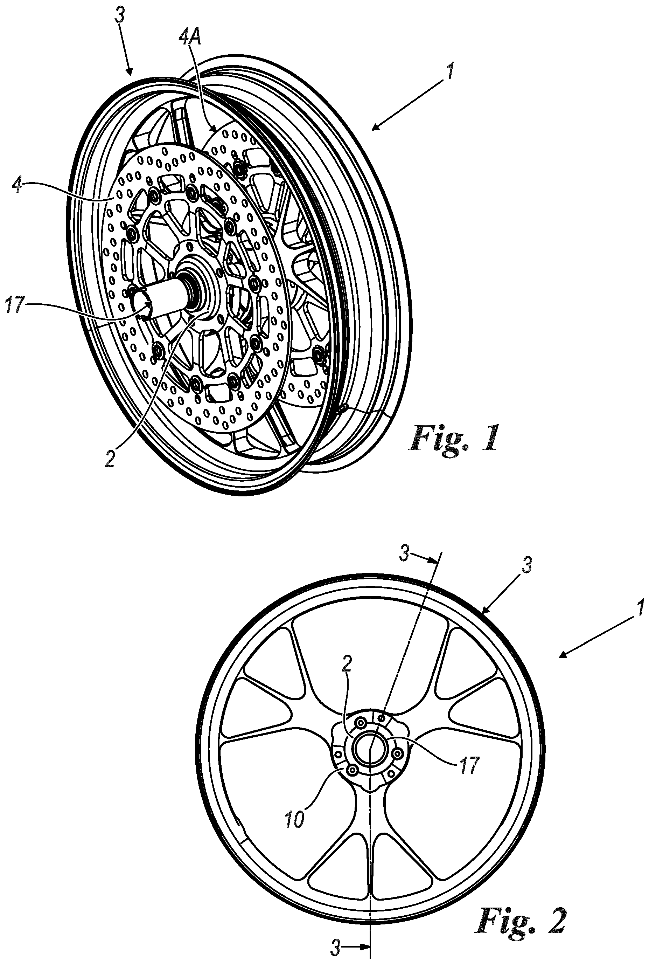

Figure 1 is a perspective view of a motorcycle wheel, without the tyre, but such as to embody the present invention;
Figure 2 is a front view of the wheel in Figure 1 with some parts omitted for greater clarity;

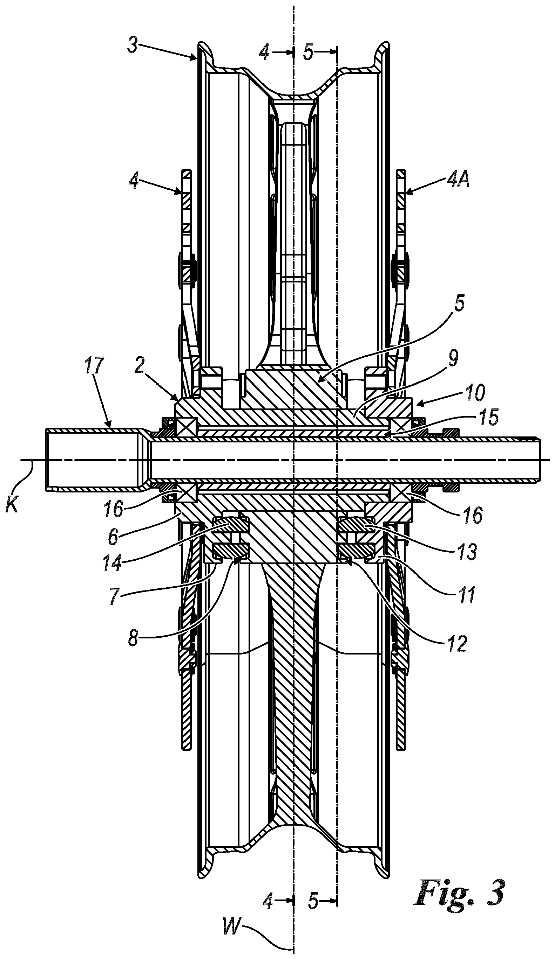

Figure 3 is a cross-sectional view of the wheel in Figure 1 along Line 3-3 of Figure 2;

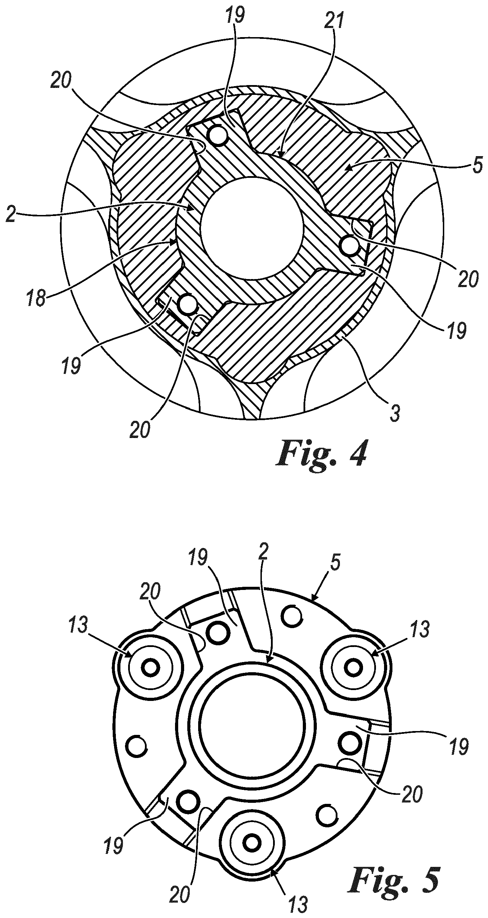

Figure 4 is a view of a detail of a cross-section along Line 4-4 of Figure 3;
Figure 5 is a view of a detail of a cross-section along Line 5-5 of Figure 3.

With reference to said figures, a wheel for a motorcycle is indicated generally by 1 and comprises a hub 2 having a first end 6, a second end 9 and a longitudinal spindle K. This hub 2 is fitted onto a hollow tubular spindle 15 carrying conventional bearings 16 at each opposing end that disconnect the hub from said spindle. The latter is connected in a known way, for example by means of a pin 17 inserted into said spindle 15, to a fork supporting the wheel (not shown), a fork that can be a double front fork or one large rear fork.

Near its first end 6, the hub 2 has a radially-protruding collar 7 onto which abuts a first brake disc 4 of a conventional motor vehicle braking system (comprising other known components, not shown). The second end 9 of the hub 2 is connected, by means of screws (not shown), to a wheel flange 10, which also has an (extremal) collar 11 resting on the above-mentioned second end 9. At the latter, a second brake disc 4A may be present.

On the hub 2 is located a floating rim 3 integral with a cylindrical portion 5 fitted onto the hub itself and torsionally secured to it. For this purpose, an external perimetral edge 18 of said hub 2 has a plurality of protrusions 19 inserted into recesses 20, of an equal number and conformation, provided on the internal surface 21 of the cylindrical portion 5. The connection between said protrusions 19 and said recesses 20 creates the torsional bond between the rim 3 and the hub 2.

The cylindrical portion 5 has a first end 8 and a second end 12. The first end 8 faces, at a distance, towards the collar 7 of the hub 2; the second end 12 is by contrast located, at a distance, opposite the collar 11 of the flange 10. Between each end 8 and 12 and said collars 7 and 11, within corresponding seats of said components are located one or several pairs of annular shock-absorbing elements (as shown in the figures), cylindrical or of similar shapes 13 and 14, made of an elastically yielding material and capable of absorbing the lateral stresses supported by the wheel, that is, the stresses that do not lie along a median plane W of the latter mating with the median plane of the frame of the motorcycle (that is, of the latter).

The figures show a solution that provides three pairs of shock-absorbing elements 13, 14 arranged angularly equidistant from each other (in the example, at 120°) about the spindle K. This solution enables an optimum distribution of the absorption of the transverse lateral stresses that act on the wheel during the movement of the vehicle when the motorcycle leans over on a bend.

Clearly, the number of these pairs of elements 13, 14 is not limited to three (as in the figures), but can range from one to a number more than three.

Each pair of shock-absorbing elements 13, 14 (each defining a lateral shock-absorbing device of the wheel) can be made of rubber, a metal or polymer material, a material with a honeycomb structure or another anistropic or in any event shock-absorbing material.

Furthermore, the shock-absorbing response of the device defined by the shock-absorbing elements 13 can be modified by changing the transverse thickness of these devices, their shape, their total number or, as stated, the material from which they are made.

The replacement of elements 13 and 14 is facilitated by the presence of the wheel flange 10: this is screwed onto the hub and so, by removing the screws, the flange 10 can be separated from the hub 2 and removed. It is thus possible to remove the corresponding elements 13 at the end 12, pull off the rim and remove the corresponding elements 14 at the end 8. Having replaced these elements, the reverse procedure is followed, inserting the elements 13 and fixing the flange 10 to the hub 2 by means of screws.

Clearly, the collar 7 can form part of a component separate from the hub, but which is fixed to it like the flange 10 so as to hold between it and the portion 5 the shock-absorbing elements 14.

Thanks to the presence of the shock-absorbing elements 13 and 14, it is possible to absorb the transverse lateral stresses that act on the wheel and thus on the frame of the vehicle when the motorcycle leans over on negotiating a bend. In this case, any irregularity in the road surface is transferred to the wheel or rather to its tyre and thus to the rim 3. Thanks to the presence of the shock-absorbing elements 13 and 14, these stresses are not transferred (or at least are transferred in a contained manner) to the forks and thus to the vehicle's frame, avoiding or in any event containing and limiting the phenomenon of "chattering" felt by the rider. All this makes for better drivability of the vehicle by the rider and greater safety of the latter.

In other words, the invention enables a reduction in the occurrence of chattering, an improvement in the motorcycle's road-holding and therefore in its performance, guaranteeing less variation in the forces of contact with the ground.

In addition, elements 13 and 14 are still bodies that are easy to fit onto the hub 2 of the wheel 1 and easy to remove from it in order to modify the response of the shock-absorbing device defined by these elements. By altering the shape, number, dimensions and materials of the elastic shock-absorbing elements 13 and 14, their response to stresses can easily be calibrated to suit the rider's driving style, the conditions of the track or road, the tyres fitted, etc.

In addition, the shock-absorbing device according to the invention can be fitted on any type of motorcycle, even those with a conventional frame, in order to enable at least the reduction of "chattering" while negotiating a bend (with the bike leaning over).

The invention enables the longitudinal rigidity of the motorcycle to be dissociated from its lateral rigidity. This is particularly advantageous in the light of their different characteristics. The former, in fact, must be high to react to the forces that occur during extreme braking, whereas the lateral rigidity must be limited so as to be better able to absorb the stresses from the ground when negotiating bends while leaning over at great angles, conditions in which conventional suspension systems are inefficient.

A particular embodiment of the invention has been described. Others are however possible in the light of the preceding description: for example, elements 13 and 14 can be connected to a rear wheel of a motorcycle. These solutions are therefore to be regarded as falling within the scope of the following claims.

## Claims

1. Motorcycle comprising a frame having a median plane (W), one front wheel and one rear wheel, each wheel (1) comprising a hub (2) with its own longitudinal spindle (K) onto which is fitted a rim (3) carrying a tyre, said hub (2) being associated with a fork and at least one brake disc (4) or similar device of a braking system of the vehicle, said rim (3) having a cylindrical portion (5) fitted onto said hub (2), the latter having at one of its first lateral ends (6) a protruding collar (7) located at a distance from a corresponding first end (8) of said cylindrical portion (5), the second end (9) of said hub (2) cooperating with a flange (10) also having a collar (11) located at a distance from a second end (12) of said cylindrical portion (5), there being between said ends (8, 12) of the cylindrical portion (5) of the rim (3) and the above-mentioned collars (7, 11) of the hub (2) and of the flange (10) elastically deformable organs (13, 14) capable of absorbing stresses directed in lateral directions in relation to the median plane (W) of the frame, said devices comprising at least one pair of shock-absorbing elements (13, 14) located between the cylindrical portion (5) of the rim (3) and said collars (7, 11) of the hub (2) and the flange (10), **characterized in that** said at least one pair of shock-absorbing elements (13, 14) is laterally located in respect of the longitudinal spindle (K) of the hub (2) and is separated by said hub, the shock-absorbing elements (13, 14) only cooperating with the cylindrical portion (5) of the rim and the collars (7, 11) protruding from the hub (2).

2. Motorcycle according to claim 1, **characterised in that** it comprises three pairs of elastically deformable elements arranged angularly equidistant from each other about the longitudinal spindle (K) of the hub (2).

3. Motorcycle according to claim 1, **characterised in that** the elastically deformable elements (13, 14) have the same mechanical and/or dimensional characteristics.

4. Motorcycle according to claim 1, **characterised in that** the elastically deformable elements (13, 14) have a shape chosen between an annular or cylindrical shape.

5. Motorcycle according to claim 1, **characterised in that** the collar (7) at the first end (6) of the hub (2) forms one piece with the latter.

6. Motorcycle according to claim 1, **characterised in that** the collar (7) at the first end (6) of the hub (2) is part of a component different from the hub (2), but fixed thereto.

7. Motorcycle according to claim 1, **characterised in that** each elastically deformable element (13, 14) is alternatively obtained from rubber, metal or polymer material, material with a honeycomb structure, anisotropic shock-absorbing material or suchlike.

## Patentansprüche

1. Motorrad, umfassend einen Rahmen mit einer Mittelebene (W), ein Vorderrad und ein Hinterrad, jedes Rad (1) umfassend eine Nabe (2) mit einer eigenen Längsspindel (K), an der eine einen Reifen tragende Felge (3) befestigt ist, wobei die Nabe (2) mit einer Gabel und mindestens einer Bremsscheibe (4) oder einer ähnlichen Vorrichtung eines Bremssystems des Fahrzeugs assoziiert ist, wobei die Felge (3) einen zylindrischen Abschnitt (5) aufweist, der an die Nabe (2) befestigt ist, wobei letztere an einem ihrer ersten seitlichen Enden (6) einen hervorstehenden Bund (7) aufweist, der sich in einem Abstand von einem entsprechenden ersten Ende (8) des zylindrischen Abschnitts (5) befindet, wobei das zweite Ende (9) der Nabe (2) mit einem Flansch (10) zusammenwirkt, der auch einen Bund (11) aufweist, der sich in einem Abstand von einem zweiten Ende (12) des zylindrischen Abschnitts (5) befindet, wobei zwischen den Enden (8, 12) des zylindrischen Abschnitts (5) der Felge (3) und den oben genannten Bunden (7, 11) der Nabe (2) und des Flanschs (10) elastisch verformbare Organe (13, 14) sind, die in der Lage sind, Spannungen zu absorbieren, die in Querrichtungen in Bezug auf die Mittelebene (W) des Rahmens gerichtet sind, wobei die Vorrichtungen mindestens ein Paar stoßdämpfender Elemente (13, 14) umfassen, die sich zwischen dem zylindrischen Abschnitt (5) der Felge (3) und den Bunden (7, 11) der Nabe (2) und des Flanschs (10) befinden, **dadurch gekennzeichnet, dass** das mindestens eine Paar stoßdämpfender Elemente (13, 14) sich seitlich in Bezug auf die Längsspindel (K) der Nabe (2) befindet und durch die Nabe getrennt ist, wobei die stoßdämpfenden Elemente (13, 14) nur mit dem zylindrischen Abschnitt (5) der Felge und den aus der Nabe (2) hervorstehenden Bunden (7, 11) zusammenwirken.

2. Motorrad nach Anspruch 1, **dadurch gekennzeichnet, dass** es drei Paare von elastisch verformbaren Elementen umfasst, die winklig in gleichem Abstand zueinander um die Längsspindel (K) der Nabe (2) angeordnet sind.

3. Motorrad nach Anspruch 1, **dadurch gekennzeichnet, dass** die elastisch verformbaren Elemente (13, 14) die gleichen mechanischen und/oder maßlichen Eigenschaften aufweisen.

4. Motorrad nach Anspruch 1, **dadurch gekennzeichnet, dass** die elastisch verformbaren Elemente (13, 14) eine Form aufweisen, die zwischen einer ringförmigen oder zylindrischen Form gewählt ist.

5. Motorrad nach Anspruch 1, **dadurch gekennzeichnet, dass** der Bund (7) an dem ersten Ende (6) der Nabe (2) ein Teil damit bildet.

6. Motorrad nach Anspruch 1, **dadurch gekennzeichnet, dass** der Bund (7) an dem ersten Ende (6) der Nabe (2) Teil einer von der Nabe (2) verschiedenen, aber daran befestigten Komponente ist.

7. Motorrad nach Anspruch 1, **dadurch gekennzeichnet, dass** jedes elastisch verformbare Element (13, 14) alternativ aus einem Gummi-, Metall- oder Polymermaterial, einem Material mit Wabenstruktur, einem anisotropem stoßdämpfendem Material oder dergleichen erlangt wird.

## Revendications

1. Motocycle comprenant un cadre disposant d'un plan médian (W), une roue avant et une roue arrière, chaque roue (1) comprenant un moyeu (2) avec son propre axe longitudinal (K) sur lequel une jante (3) est fixée supportant un pneu, ledit moyeu (2) étant associé à une fourche et au moins un disque de frein (4) ou un dispositif similaire d'un système de freinage du véhicule, ladite jante (3) possédant une partie cylindrique (5) fixée sur ledit moyeu (2), ce dernier possédant à l'une de ses premières extrémités latérales (6) un collier en saillie (7) situé à distance d'une première extrémité (8) correspondante de ladite partie cylindrique (5), la seconde extrémité (9) dudit moyeu (2) coopérant avec une bride (10) possédant également un collier (11) situé à distance d'une seconde extrémité (12) de ladite partie cylindrique (5), entre lesdites extrémités (8, 12) de la partie cylindrique (5) de la jante (3) et les colliers susmentionnés (7, 11) du moyeu (2) et de la bride (10) se trouvent des organes élastiquement déformables (13, 14) capables d'absorber les contraintes venant de directions latérales par rapport au plan médian (W) du cadre, lesdits dispositifs comprenant au moins une paire d'éléments amortisseurs (13, 14) situés entre la partie cylindrique (5) de la jante (3) et lesdits colliers (7, 11) du moyeu (2) et la bride (10), **caractérisé en ce que** au moins une paire d'éléments amortisseurs (13, 14) est située latéralement par rapport à l'axe longitudinal (K) du moyeu (2) et est séparée par ledit moyeu, les éléments amortisseurs (13, 14) coopérant uniquement avec la partie cylindrique (5) de la jante et des colliers (7, 11) faisant saillie du moyeu (2).

2. Motocycle selon la revendication 1, **caractérisé en ce qu'**il comprend trois paires d'éléments élastiquement déformables placés angulairement équidistant les uns des autres le long de l'axe longitudinal (K) du moyeu (2).

3. Motocycle selon la revendication 1, **caractérisé en ce que** les éléments élastiquement déformables (13, 14) possèdent les mêmes caractéristiques mécaniques et/ou dimensionnelles.

4. Motocycle selon la revendication 1, **caractérisé en ce que** les éléments élastiquement déformables (13, 14) ont une forme choisie entre une forme annulaire ou cylindrique.

5. Motocycle selon la revendication 1, **caractérisé en ce que** le collier (7) au niveau de la première extrémité (6) du moyeu (2) ne forme qu'une seule pièce avec ce dernier.

6. Motocycle selon la revendication 1, **caractérisé en ce que** le collier (7) au niveau de la première extrémité (6) du moyeu (2) fait partie d'un composant différent du moyeu (2), mais fixé à celui-ci.

7. Motocycle selon la revendication 1, **caractérisé en ce que** chaque élément élastiquement déformable (13, 14) est alternativement obtenu à partir de caoutchouc, métal ou matière polymère, matériau avec une structure alvéolaire, matériau amortisseur anisotrope ou similaire.
